# EUROPÄISCHE PATENTANMELDUNG

(11) **EP 0 525 343 A2**
(43) Veröffentlichungstag der Anmeldung: **03.02.1993**
(21) Anmeldenummer: 92109896.8
(22) Anmeldetag: 12.06.1992
(51) Int. Cl.: A01G 9/00, E04D 11/00, E04D 12/00

(54) **Haltekonstruktion für Dachbegrünungen**

(30) Priorität: 24.07.1991 DE 4124448
(71) Anmelder: Steinbronn, Hans, D-55124 Mainz (DE)
(72) Erfinder: Steinbronn, Hans, D-55124 Mainz (DE)
(74) Vertreter: Weber, Dieter, Dr.

(57) **Zusammenfassung**

Die Erfindung betrifft eine Haltekonstruktion für das Substrat von Dachbegrünungen an Schrägdächern. Um eine solche Haltekonstruktion für das Substrat von Dachbegrünungen zu schaffen, welche in der Lage ist, das Substrat auch an Dächern mit Neigungen von mehr als 25° , und vorzugsweise bis etwa 45°, sicher zu halten, wird erfindungsgemäß vorgeschlagen, daß Längsträger (1) vorgesehen sind, die sich im Abstand voneinander im wesentlichen in Neigungsrichtung des Daches erstrecken und gegen Abrutschen in dieser Richtung abgefangen sind, sowie Querträger (2), welche sich im Abstand voneinander senkrecht zu den Längsträgern (1) erstrecken und an diesen befestigt sind, wobei Substratmaterial in den so gebildeten rechteckigen Feldern (3) aufnehmbar ist und durch die Querträger (2) gegen Abrutschen gesichert ist.

## Beschreibung

Die vorliegende Erfindung betrifft eine Haltekonstruktion für das Substrat von Dachbegrünungen an Schrägdächern.

Dachbegrünungen haben generell einen mehrschichtigen Aufbau. Über einer Wärmeisolierungsschicht befindet sich zunächst eine wasserdichte Zwischenhaut, z.B. in Form einer dicken PVC-, einer Polyethylen- oder einer mehrschichtigen, mit Gewebe verstärkten Folie. Über der wasserdichten Schicht ist eine Wasserspeicher- und Drainageschicht angeordnet, mit einer Vielzahl gleichmäßig beabstandeter Wasserspeicherbehälter und Drainagekanälen für überschlüssiges Regenwasser oder zur Bewässerung bewußt zugegebenes Wasser. Diese Wasserspeicherschicht ist im allgemeinen mit einer dünnen Filterschicht abgedeckt, auf der schließlich das Substrat angeordnet ist, in welchem die Pflanzen der Dachbegrünung wurzeln.

Es versteht sich, daß daß auf die Filterschicht aufgebrachte Substrat nur schlecht Halt finden kann und auf Schrägdächern zum Abrutschen neigt. Derartige Dachbegrünungen sind deshalb bisher fast nur für Flachdächer eingesetzt worden.

Aus der DE-OS 37 28 470 ist bereits ein System bekannt, bei welchem eine Kunststoffolie auf das Dach aufgelegt wird und sich senkrecht von der Ebene der Bahn erstreckende Laschen oder Vorsprünge aufweist, welche das Substrat gegen Abrutschen sichern sollen. Darüberhinaus ist es üblich, daß Substrat vorzukultivieren und in Form von bereits gut mit Wurzeln durchwachsenen Matten auf daß Dach aufzulegen, so daß das Substrat durch den Bewuchs selbst zusammengehalten und gegen ein Abrutschen oder Wegspülen, insbesondere bei heftigen Regenfällen, gesichert wird.

Mit keinem der bisher bekannten Systeme ist es jedoch möglich, ein Substrat für Dachbegrünungen an Dächern in akzeptabler Weise zu sichern, die eine Neigung von mehr als 20 oder 25 aufweisen.

Die hervorragenden Wärmeausgleichseigenschaften von Dachbegrünungen und ihr positiver Einfluß auf das Raumklima vor allem in Räumen, die sich bis unter ein Dach erstrecken, lassen es jedoch wünschenswert erscheinen, derartige Begrünungen auch an Dächern vorzusehen, die von vornherein steiler sind oder aufgrund architektonischer Gegebenheiten oder baurechtlicher Bestimmungen mit Neigungen von mehr als 25 erstellt werden sollen oder müssen.

Der Erfindung liegt daher die Aufgabe zugrunde, eine Haltekonstruktion für das Substrat von Dachbegrünungen zu schaffen, welche in der Lage ist, daß Substrat auch an Dächern mit Neigungen von mehr als 25 °, und vorzugsweise bis etwa 45 °, sicher zu halten.

Diese Aufgabe wird gelöst durch Längsträger, die sich im Abstand voneinander im wesentlichen in Neigungsrichtung des Daches erstrecken und gegen Abrutschen in dieser Richtung abgefangen sind, sowie durch Querträger, welche sich im Abstand voneinander senkrecht zu den Längsträgern erstrecken und an diesen befestigt sind, wobei daß Substratmaterial in den so gebildeten rechteckigen Feldern aufnehmbar und durch die Querträger gegen Abrutschen gesichert ist.

Die Längsträger werden dabei vorzugsweise an der Dachtraufe abgefangen, können jedoch wahlweise auch vom First her abgehängt werden. Auch Befestigungen an der Dachunterkonstruktion sind möglich, jedoch erfordern derartige Befestigungen ein Durchdringen der wasserdichten Schicht mit entsprechenden Halteelementen, was besondere Maßnahmen zum Abdichten der Durchdringungsstellen erfordert.

Die erfindungsgemäße Konstruktion erlaubt es, daß Substrat selbst ohne aufwendige Vorkultivierung in die zwischen Längs- und Querträgern gebildeten Felder einzubringen, wo es jeweils durch einen Querträger gegen Abrutschen gesichert ist. Dabei sind die einzelnen Felder, in Neigungsrichtung des Daches gemessen, umso schmaler, je steiler daß Dach ist, so daß die Querträger die auftretenden Schubkräfte in jedem Fall sicher aufnehmen können.

Dabei ist es besonders vorteilhaft, wenn die Querträger sich mindestens teilweise zwischen den Längsträgern erstrecken, so daß die Unterkante der Querträger unterhalb der Oberkante der Längsträger liegt. Werden die Querträger lediglich oben auf den Längsträgern befestigt, wie dies z.B. bei einer Dachunterkonstruktion mit Pfetten und Dachlatten der Fall ist, so läge die Unterlage der Querträger notwendigerweise in einem Abstand über der Filterschicht, welcher der Höhe des Längsträgers entspricht. Je nach Höhe des Längsträgers reicht dieser Abstand zwar aus, um gegebenenfalls vorkultivierte Substratmatten zu sichern, man erreicht jedoch mit Vorteil, daß man auch relativ loses Substratmaterial gegen Abrutschen sichern kann, wenn die Unterkante der Querträger sich näher an der Filterschicht befindet. Zweckmäßigerweise sollte die Unterkante der Querträger nicht mehr als 2 cm von der unter der Haltekonstruktion befindlichen Dachschicht beabstandet sein. Die Querträger erfüllen damit eine sehr sinnvolle Doppelfunktion, da sie in dieser Form nicht nur das Substratmaterial gegen Abrutschen sichern, sondern auch beispielsweise im Falle heftiger Regengüsse verhindern, daß ein großer Teil des Wassers im Substrat abfließt und dieses ausschwemmt. Durch die Querträger wird nämlich das im Substrat nach unten fließende Wasser abgefangen und nach unten in Richtung auf die Filterschicht gelenkt, so daß es schnell durch die Filterschicht hindurch und in den Wasserspeicher- und Drainagebereich eintreten kann.

Als zweckmäßig hat es sich weiterhin erwiesen, wenn die Längsträger in einem Rastermaß voneinander beabstandete Befestigungspunkte für die Querträger aufweisen. Das Rastermaß wird dabei so gewählt, daß die Abstände zwischen den Querträgern in dem erforderlichen Umfang variiert werden können, d.h. daß ein großer Abstand für relativ flache Dächer und ein engerer Abstand für relativ steile Dächer vorgesehen werden kann. Außerdem ist zu berücksichtigen, daß die Querträger nicht notwendigerweise über eine Mehrzahl von Längsträgern durchlaufen, sondern nur jeweils zwischen zwei Querträgern angeordnet sind, wobei die Querträger benachbarter Felder gegebenenfalls an dem nächst höheren oder tieferen Befestigungspunkt ansetzen müssen.

Bei der bevorzugten Ausführungsform der Erfindung bestehen diese Befestigungspunkte aus im wesentlichen vertikalen Schlitzen, deren Breite der Dicke der Querträger und deren Tiefe in etwa der halben Breite der Querträger entspricht. In entsprechender Weise haben die Querträger an ihrer Unterseite Schlitze, deren Abstand dem Längsträgerabstand entspricht und deren Tiefe ebenfalls ihrer halben Breite entspricht. Außerdem ist die Breite der Schlitze der Querträger der Dicke der Längsträger angepaßt. Auf diese Weise können Quer-und Längsträger in den Schlitzbereichen ineinandergesteckt werden, wobei die Oberkante der Querträger im zusammengesteckten Zustand bündig mit der Oberkante der Längsträger abschließt, wenn die Tiefe der beiden Schlitze jeweils der halben Breite des Querträgers entspricht.

Dabei wird weiterhin eine Ausführungsform der Erfindung bevorzugt, bei welcher die Längsträger einen T-förmigen Querschnitt haben, wobei die Flanschseite des T-Trägers zum Dach hin gewendet ist. Für die Befestigung der Querträger steht dann der sich vom Dach weg erstreckende Steg dieses T-Trägers zur Verfügung. Als Material für Längs- und Querträger wird vorzugsweise Recycling-Kunststoff, d.h. aus Altmaterial wiedergewonnener Kunststoff, bevorzugt.

Außerdem ist es zweckmäßig, wenn die Längsträgerabstände und das Rastermaß der Befestigungspunkte an den Längsträgern mit einem Standardpalettenmaß kompatibel sind. Das heißt, ein Standardpalettenmaß sollte ein ganzzahliges Vielfaches des Rastermaßes und des Längsträgerabstandes sein, umgekehrt könnte auch der Längsträgerabstand ein ganzzahliges Vielfches eines Standardpalettenmaßes sein.

Besonders bevorzugt ist eine Ausführungsform der Erfindung, bei weicher das Substrat in separaten Kästen in die Felder eingesetzt ist, wobei die Kästen so bemessen sind, daß jeweils ein oder mehrere Kästen ein zwischen Längs- und Querträgern gebildetes Feld im wesentlichen ausfüllen. Daraus ergibt sich, daß auch diese Kästen zu einem Standardpalettenmaß kompatibel sein sollten, was die Lagerung, den Transport und die Lieferung des in den Kästen enthaltenen Substratmaterials erleichtert. Die Kästen erlauben einen größeren Abstand der Längs- und Querträger, da sie ebenfalls das Substrat zumindest solange an Ort und Stelle halten, bis es ausreichend durchwachsen ist, um allein durch die Querträger gegen Abrutschen gesichert zu sein. Dabei stützen sich die Kästen zunächst ihrerseits an den Querträgern ab.

Dabei sind die Kästen vorzugsweise bereits mit Pflanz- bzw. Saatgut besetzt. Außerdem können die Kästen aus einem leicht verrottbaren Material bestehen, was den Vorteil hat, daß sie zum einen Nahrung und Düngermaterial für die Pflanzen bilden und daß zum anderen die Wurzeln der Pflanzen sich über das gesamte Substrat in einem Feld ausbreiten können, was dem Substrat einen sicheren Halt gibt. Die Verrottungsdauer für die Kästen sollte in etwa zwischen sechs Monaten und zwei Jahren liegen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
Figur 1 einen Ausschnitt aus einer Haltekonstruktion mit drei Längs-und mehreren Querträgern in gleichmäßigen Abständen,
Figur 2 einen Ausschnitt ähnlich Figur 1 jedoch mit unterschiedlichen Querträgerabständen,
Figur 3a eine Schnitt- und eine Seitenansicht eines Längsträgers,
Figur 3b eine Draufsicht von oben auf einen Längsträger,
Figur 3c Seitenansichten je eines Längsträgerendes,
Figur 4 verschiedene Ansichten eines Querträgers,
Figur 5 eine Verbindung zweier Längsträger in Längsrichtung,
Figur 6 einen Einsatzkasten in verschiedenen Ansichten mit Bepflanzung und
Figur 7 den Kasten nach Figur 6 ohne Bepflanzung.

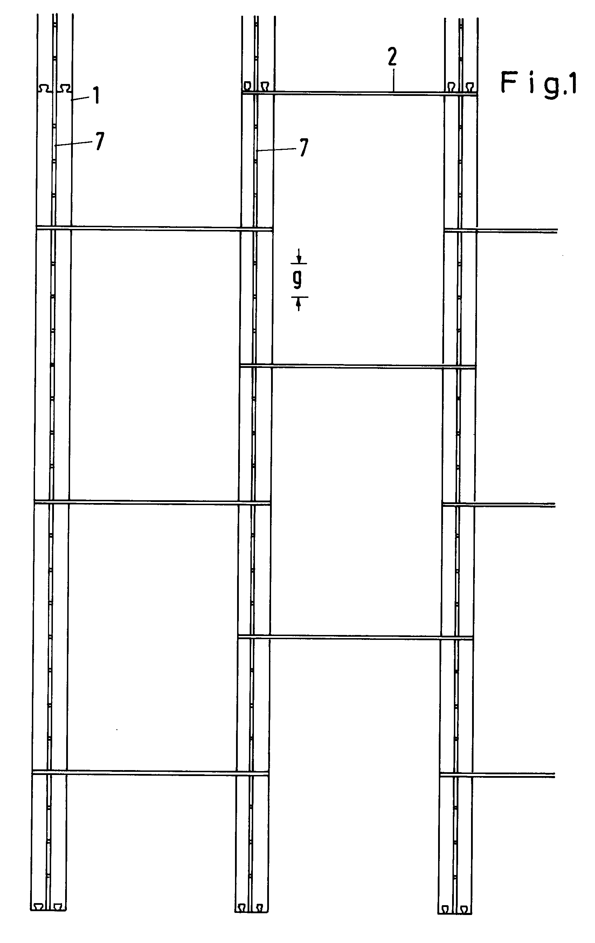

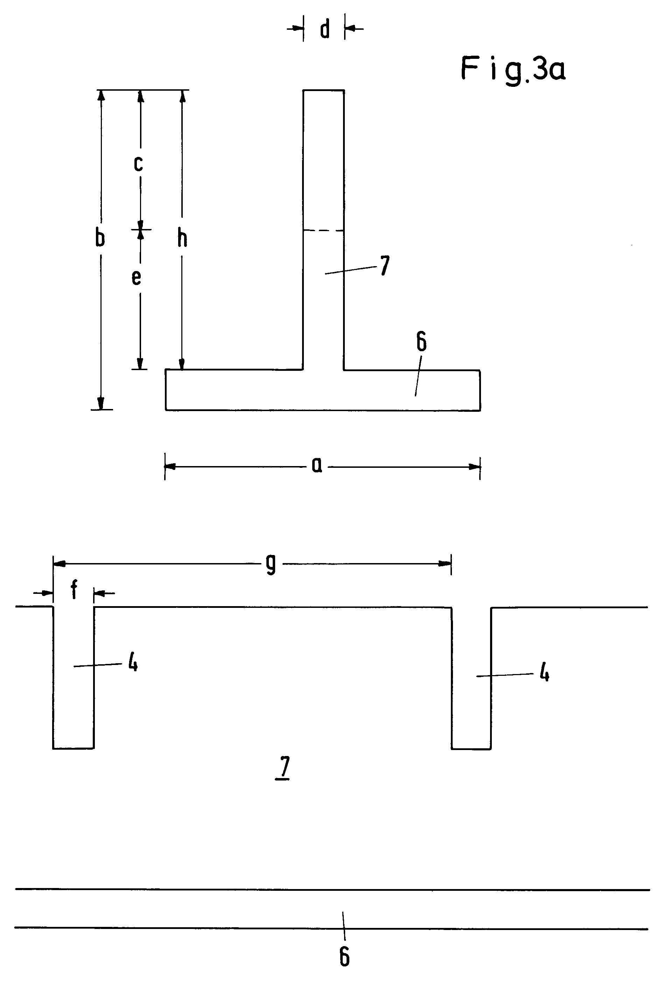

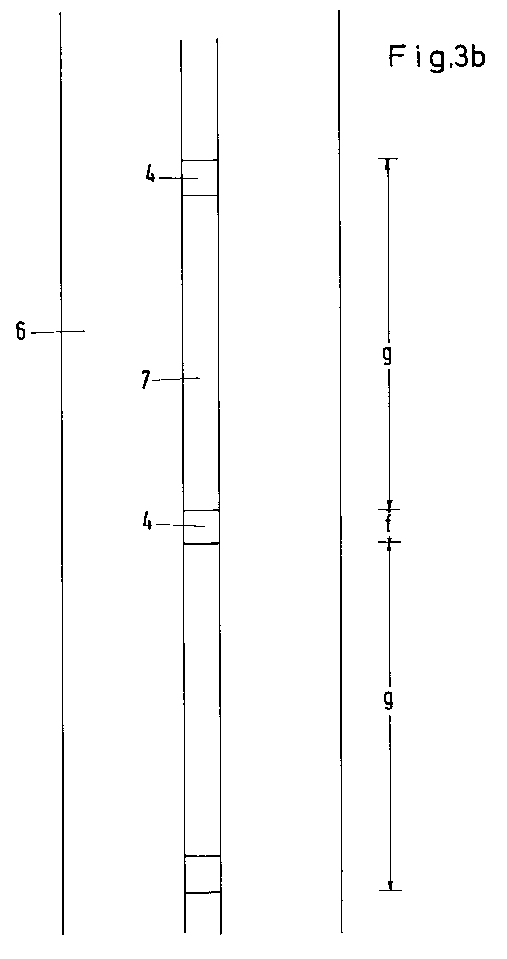

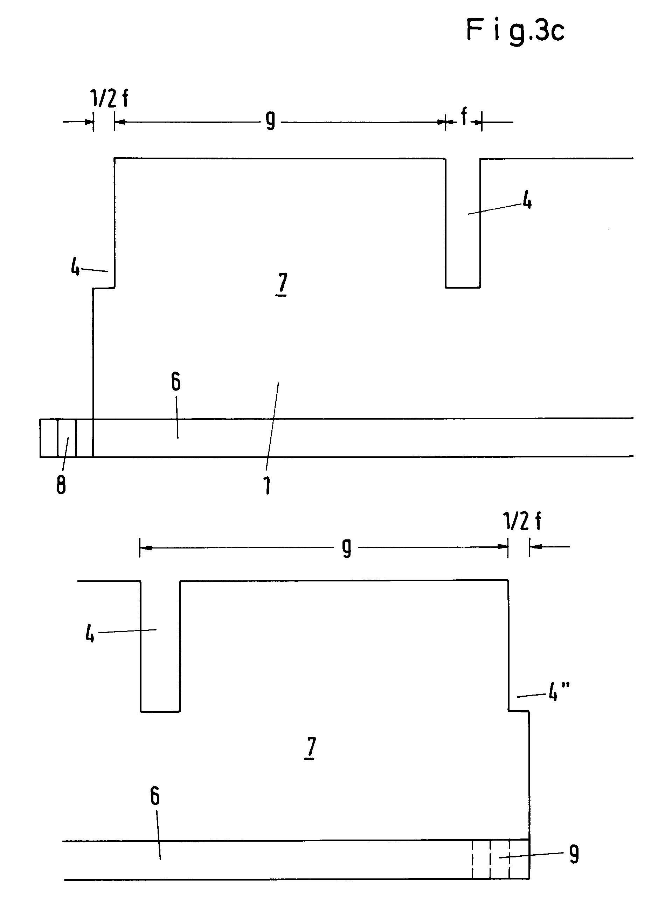

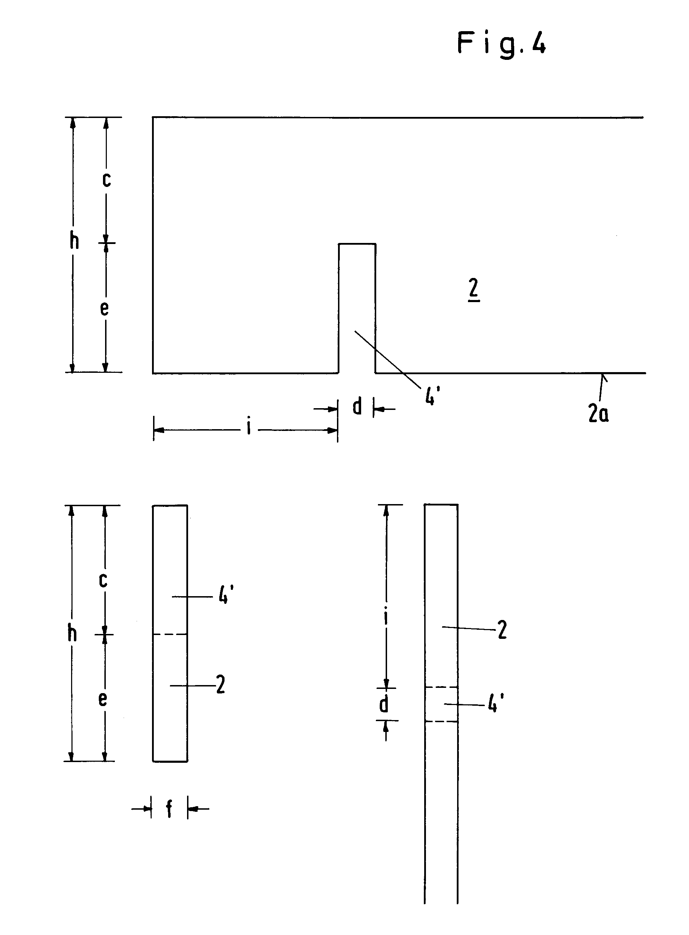

In Figur 1 erkennt man drei Längsträger 1, auch als Binder bezeichnet, weiche darüberhinaus in ihrer Längsrichtung mit weiteren Längsträgern verbunden sind. Wegen der genauen Form der Längsträger 1 und der Querträger 2, auch als Schübe bezeichnet, wird auch auf die Figuren 3 und 4 Bezug genommen. Die Längsträger 1 sind im Querschnitt T-förmig, wobei der T-Flansch auf dem Dach bzw. der Filterschicht oberhalb der Wasserspeicher- und Drainageschicht des Daches, aufliegt. Der Steg 7 des T-Trägers 1 erstreckt sich nach außen weg von der Dachfläche und weist in einem gleichmäßigen Rasterabstand g Schlitze 4 auf, deren Tiefe genau der halben Stegbreite bzw. Höhe h entspricht, die wiederum genau mit der Breite bzw. Höhe der Querträger 2 übereinstimmt.

Das Rastermaß g liegt typischerweise in der Größenordnung von 10 bis 20 cm. Die Querträger 2 haben eine Länge, die dem lichten Abstand zwischen zwei Längsträgern zuzüglich zweier Längsträgerbreiten entspricht. Im Abstand der Stege 7 benachbarter Längsträger weist der Querträger 2 Schlitze auf, deren Tiefe der Hälfte ihrer Breite bzw. Höhe H entspricht. Die Querträger 1 haben die Form schmaler Bretter oder Leisten. Zweckmäßigerweise sind die Stege 7 der Längsträger genauso dick und auch genauso hoch bzw. breit wie die Querträger. In diesem Fall haben die Schlitze in den Längsträgern 1 und die Schlitze in den Querträgern 2 genau das gleiche Maß. Als "Schlitze" in den Längs- bzw. Queträgern werden im Sinne der vorliegenden Erfindung auch entsprechende rechteckige Aussparungen an den Enden der Längs- bzw. Querträger angesehen. So könnte beispielsweise die Länge der Querträger auch auf den lichten Abstand zwischen zwei benachbarten Stegen 7 zuzüglich der Dicke d der beiden Stege begrenzt sein, wobei die "Schlitze" dann in Form entsprechender Aussparungen an den Enden des Querträgers vorzusehen wären.

Werden die Querträger der Dicke d mit ihren Schlitzen genau im Schlitzbereich der Längsträger auf die Stege 7 aufgesteckt, so greifen diese Teile gerade so ineinander, daß die Oberkante der Querträger 2 mit der Oberkante der Stege 7 der Längsträger 1 bündig abschließt. Die Unterkante der Querträger 2 sitzt dann im Endbereich auf der Oberseite der Flansche 6 der Längsträger 1 auf, so daß also die Unterkante 2a der Querträger einen Abstand hat, welcher der Dicke des Flansches 6 entspricht. Es können jedoch wahlweise an der Unterkante 2a im Bereich des Flansches 6 weitere Aussparungen vorgesehen werden, und die Schlitze 4 können außerdem so vertieft werden, daß die Unterkante 2a der Querträger auch zwischen den Flanschen 6 noch weiter in Richtung des Daches abgesenkt wird. Die Breite der Querträger 6 wird dann zweckmäßigerweise so angepaßt, daß ihre Oberkante nach wie vor bündig mit der Oberkante der Längsträger 1 abschließt.

In der in Figur 1 dargestellten Ausführungsform sind die Querträger 2 im achtfachen Rastermaß voneinander beabstandet und sind zwischen benachbarten Längsträgerpaaren jeweils um die halbe Feldlänge versetzt zueinander angeordnet. Eine Versetzung der Felder zueinanderist ist auf jeden Fall dann erforderlich, wenn die Querträger sich in der dargestellten Weise über die gesamte Längsträgerbreite hinweg erstrecken, da so einTeil der Befestigungspunkte immer von Querträgern benachbarter Felder besetzt ist.

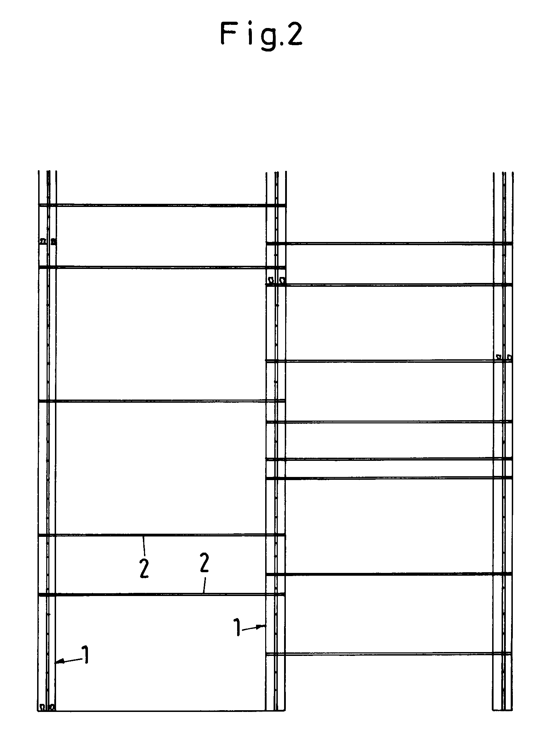

In Figur 2 ist jedoch dargestellt, welche Variationsmöglichkeiten der Anbringung der Querträger 2 sich bei dem hier beschriebenen System ergeben. Innerhalb des vorgegebenen Rastermaßes können also die Längen der Felder weitgehend beliebig variiert werden.

In Figur 3 erkennt man einen Längsträger 1 im Schnitt und in einer Seitenansicht. In dem dargestellten Beispiel stimmt die Flanschbreite a mit der Gesamthöhe b des T-Trägers überein, wobei die Steghöhe h gegenüber dem Maß b um die Flanschdicke vermindert ist. Diese Steghöhe h stimmt genau mit der Höhe h der Querträger überein. Flansch 6 und Steg 7 haben jeweils die gleiche Dicke. Die Schlitze 4 sind im unteren Teilbild der Figur 3a deutlich zu erkennen. Sie haben eine Breite, die der Dicke des Querträgers 2 entspricht, während ihre Tiefe genau der halben Höhe h des Steges 7 und der Querträger 2 entspricht.

Figur 3b zeigt eine Draufsicht auf einen Längsträger 1 von oben.

In Figur 4 ist ein Querträger 2 in der Seitenansicht, im Schnitt und in einer Ansicht von oben dargestellt. Man erkennt, daß der Querträger 2 die gleiche Dicke d hat wie der Flansch 6 und der Steg 7 des Längsträgers 1 und daß dementsprechend der Schlitz 4' der Querträger dasselbe Maß hat wie die Schlitze 4 des Längsträgers 1. Die Länge des Querträgers 2 ist so bemessen, daß er beiderseits über die Schlitze 4' hinaus einen Überstand der Länge i hat, so daß das Ende des Querträgers 2 mit dem Außenrand des Flansches 6 eines Längsträgers 1 bündig abschließt, wenn Querträger 2 und Steg 7 in ihren Schlitzbereichen ineinandergesteckt sind.

Wahlweise kann jedoch der Überstand der Länge i auch vollständig entfallen, so daß der Schlitz 4' lediglich die Form einer rechteckigen Aussparung an den Enden des Querträgers 2 hat. In diesem Fall würden die Enden des Querträgers im zusammengesteckten Zustand bündig mit der Außenseite des Steges 7 abschließen. Sofern der Steg 7 entsprechend dick und der Abstand zwischen den Längsträgern 1 nicht zu groß ist, könnte das Längenmaß der Querträger 2 noch weiter reduziert werden, so daß der Endabschnitt der Querträger 2 nur bis zur Hälfte, gemessen in Dickenrichtung des Steges 7, in den Schlitz 4 hineinragt. In diesem Fall könnten nämlich die Querträger 2 benachbarter Felder an demselben Rasterpunkt bzw. Schlitz 4 ein und desselben Längsträgers 1 befestigt bzw. eingeschoben werden. Dies setzt allerdings voraus, daß sich die Querträger unter der auf sie wirkenden Schublast nicht so weit verbiegen können, daß sie aus den Schlitzen 4 herausrutschen.

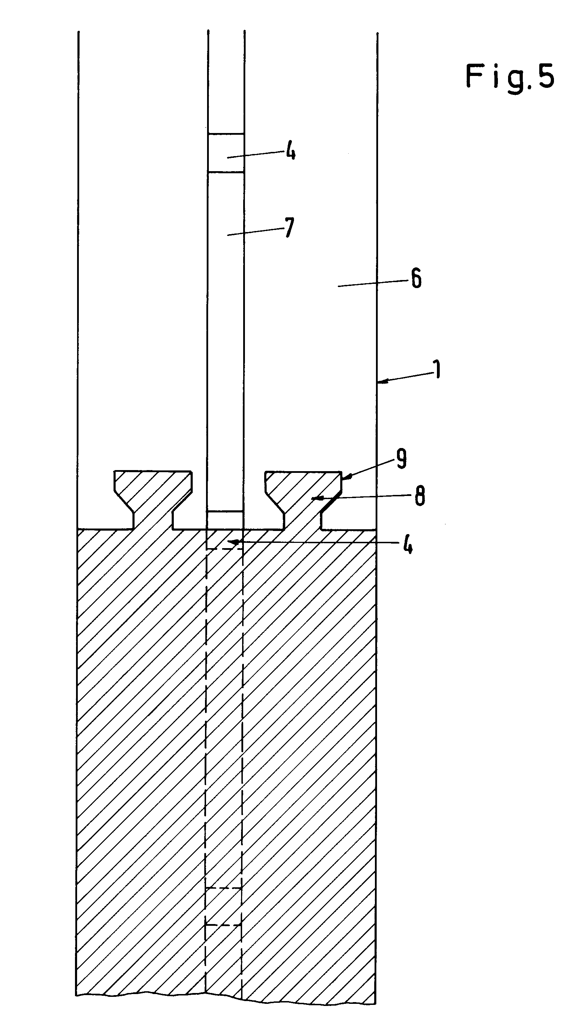

In Figur 3c erkennt man in Seitenansichten jeweils das Ende eines Längsträgers 1. Der Steg 7 des Längsträgers 1 weist an beiden Enden je eine Aussparung 4" auf, die gerade die halbe Breite eines Schlitzes 4 hat. Der Flansch 6 weist an einer Seite einen sich zum Ende hin verbreiternden Zapfen 8 auf, während das andere Ende eine passende, hinterschnittene Aussparung 9 hat, wobei die Form des Zapfens 8 und der Aussparung 9 in Figur 5 nochmals deutlich zu erkennen sind. Die Längsträger können so zu längeren Einheiten zusammengesetzt werden und sind dabei auf Zug und Druck in Längsrichtung belastbar. Gleichzeitig wird durch die beiden einander gegenüberliegenden Aussparungen 4" an einer solchen Verbindungsstelle ein weiterer Schlitz 4 gebildet, der genau in das Rastermaß paßt.

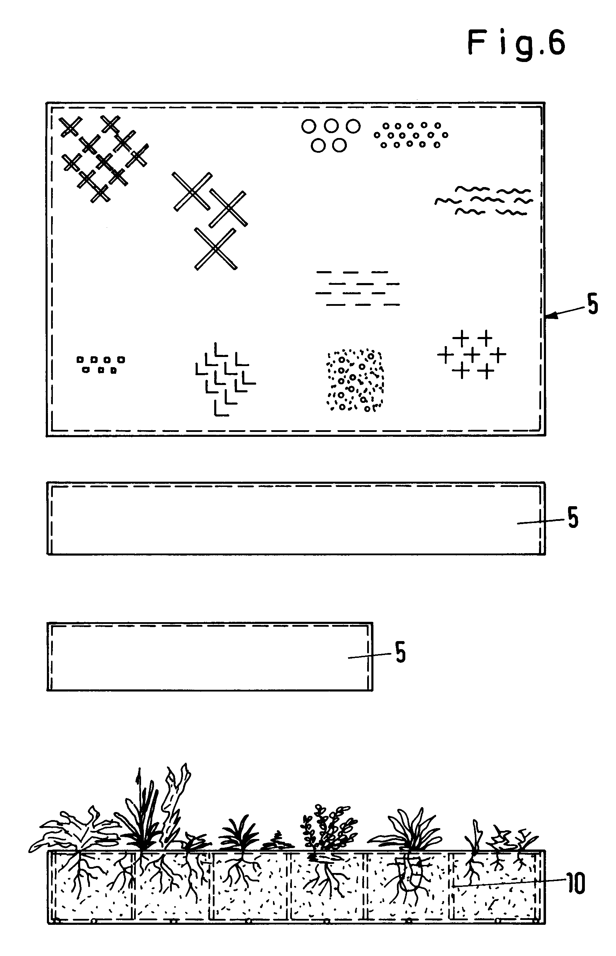

In Figur 6 erkennt man einen Kasten 5 mit einer Vielzahl von kreuzweise angeordneten Stegen 10, welche die Kästen in eine entsprechende Vielzahl gleichmäßiger Felder einteilen. Der Kasten ist oben offen und weist in jedem Feld an der Unterseite eine Bohrung bzw. ein Loch 11 auf. Wahlweise kann auch ein Deckel auf der Oberseite des Kastens angeordnet werden.

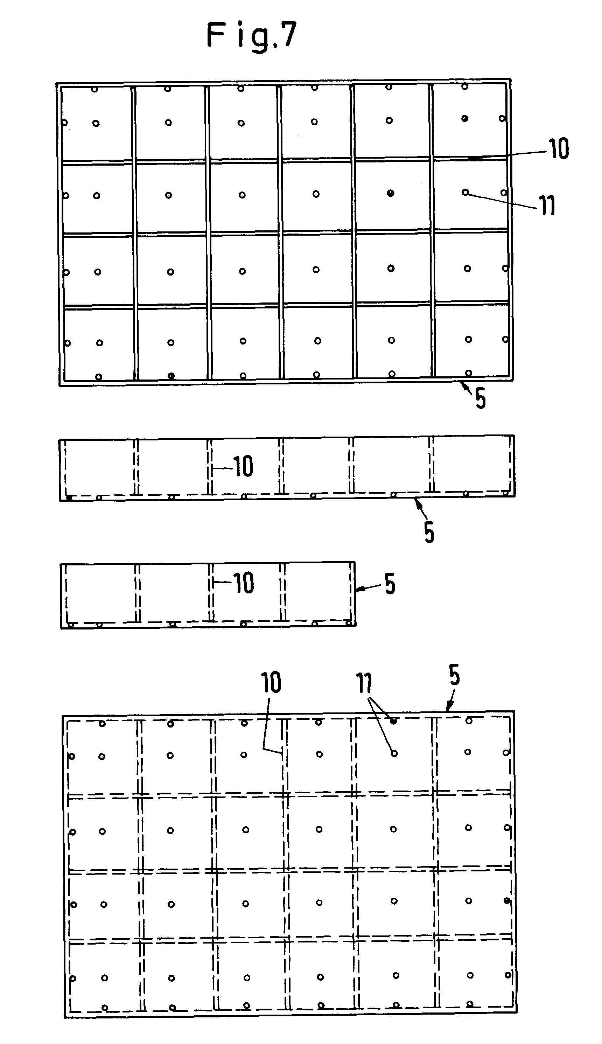

In Figur 7 ist der gleiche Kasten nochmals dargestellt, wobei in diesem Fall die einzelnen Kammern des Kastens mit Substrat gefüllt und bepflanzt bzw. vorkultiviert sind. Der gesamte Kasten 5 besteht vorzugsweise aus einem relativ leicht verrottbaren Material, wobei es besonders bevorzugt ist, wenn die Stege 10 aus einem Material bestehen, was relativ schnell, d.h. in einem Zeitraum zwischen etwa zwei Wochen und drei Monaten verrottet, während die Außenwände und der Boden des Kastens 5 in einem Zeitraum zwischen sechs Monaten und etwa zwei Jahren verrotten sollten.

Das verrottende Material stellt gleichzeitig Dünger und Nahrung für die Pflanzen bereit, wobei die Materialauswahl auch gezielt im Hinblick auf diese Düngewirkung getroffen werden kann.

Die Außenmaße des Kastens sind so gewählt, daß sie mit den Feldmaßen der Felder 3 der Haltekonstruktion kompatibel sind, d.h. ein oder mehrere Kästen füllen ein solches Feld möglichst genau aus. Dabei kann das Feldmaß und das Kastenmaß auch auf ein Standardpalettenmaß (z.B. Europalette) abgestimmt sein. Die mit Substrat gefüllten Kästen 5 können dann in vorteilhafter Weise auf derartigen Paletten gestapelt und angeliefert werden.

In Figur 5 erkennt man noch im Detail eine Möglichkeit, wie die Längsträger gegebenenfalls in Längsrichtung miteinander zu verbinden sind, indem nämlich an den jeweiligen Flanschenden Zapfen 8, die in Richtung ihrer Enden verbreitert sind, und passende hinterschnittene Aussparungen 9 vorgesehen werden, die so ineinandergreifen, daß die miteinander verbundenen Längsträger gegen Zug in Längsrichtung aneinander gesichert sind. Es versteht sich, daß die Länge der Längsträger 1 immer dem Vielfachen eines Rastermaßes entspricht, wobei es zweckmäßig ist, wenn jeweils der Endabschnitt eines Steges 1 eine rechteckige Aussparung in Form eines halben Schlitzes 4 aufweist, die mit der anschließenden Aussparung des nächst folgenden Längsträgers zusammen den gewünschten Schlitz 4 bildet.

Am First eines Daches können jeweils die zu den gegenüberliegenden Seiten hin verlaufenden Längsträger durch zusätzliche Halteelemente miteinander verbunden sein. Sofern die Längsträger 1 am First eine ausreichend stabile Unterstützung haben, kann man bei fester Verbindung der gegenüberliegenden Längsträger 1 am First auch auf eine Abstützung im Traufenbereich verzichten, weil die Längsträger 1 so vom First her sicher abgefangen sind.

Mit der vorliegenden Haltekonstruktion ist eine Möglichkeit geschaffen worden, Dachbegrünungen auch an vergleichsweise steilen Dächern mit bis zu 45 ° Dachneigung sicher anzubringen. Damit ist der Einsatzbereich von Dachbegrünungen erheblich erweitert, da nunmehr auch Dächer im Industrie- und Wohnbereich für Begrünungen in Betracht kommen, die bisher wegen zu starker Dachneigung von vornherein hierfür ausgeschieden waren.

## Patentansprüche

1. Haltekonstruktion für das Substrat von Dachbegrünungen an Schrägdächern, gekennzeichnet durch Längsträger (1), die sich im Abstand voneinander im wesentlichen in Neigungsrichtung des Daches erstrecken und gegen Abrutschen in dieser Richtung abgefangen sind, und Querträger (2), welche sich im Abstand voneinander senkrecht zu den Längsträgern (1) erstrecken und an diesen befestigt sind, wobei Substratmaterial in den so gebildeten rechtekkigen Feldern (3) aufnehmbar ist und durch die Querträger (2) gegen Abrutschen gesichert ist.

2. Haltekonstruktion nach Anspruch 1, dadurch gekennzeichnet, daß die Längsträger (1) an der Dachtraufe abgefangen sind.

3. Haltekonstruktion nach Anspruch 1, dadurch gekennzeichnet, daß die Längsträger (1) am Dachfirst gesichert sind.

4. Haltekonstruktion nach einem der Ansprüche 1 bis 3, dadurch gekennzeichnet, daß die Querträger (2) sich mindestens teilweise zwischen den Längsträgern (1) derart erstrecken, daß die Unterkante (2a) der Querträger (2) unterhalb der Oberkante (1 a) der Längsträger (1) liegt.

5. Haltekonstruktion nach einem der Ansprüche 1 bis 4, dadurch gekennzeichnet, daß die Unterkante (2a) der Querträger (2) mindestens bis auf 2 cm an die unter der Haltekonstruktion befindliche Dachschicht heranreicht.

6. Haltekonstruktion nach einem der Ansprüche 1 bis 5, dadurch gekennzeichnet, daß die Längsträger in einem Rastermaß voneinander beabstandete Befestigungspunkte für den Querträger (2) aufweisen.

7. Haltekonstruktion nach Anspruch 6, dadurch gekennzeichnet, daß die Befestigungspunkte aus im wesentlichen vertikalen Schlitzen (4) bestehen, deren Breite (d) der Dicke der Querträger (2) und deren Tiefe (c) in etwa der halben Breite (h) der Querträger (2) entspricht.

8. Haltekonstruktion nach Anspruch 7, dadurch gekennzeichnet, daß die Querträger an ihrer Unterseite Schlitze aufweisen, deren Abstand dem Abstand der Längsträger (1) und deren Tiefe (e) in etwa ihrer halben Breite (h) entspricht, wobei die Schlitzbreite so bemessen ist, daß der Längsträger (1) in Querrichtung darin aufnehmbar ist.

9. Haltekonstruktion nach einem der Ansprüche 1 bis 8, dadurch gekennzeichnet, daß die Längsträger (1) einen T-förmigen Querschnitt haben, wobei die Flanschseite des T-Trägers (1) zum Dach hin gewendet ist.

10. Haltekonstruktion nach einem der Ansprüche 1 bis 9, dadurch gekennzeichnet, daß Längsträger (1) und Querträger (2) aus, vorzugsweise aus Altmaterial wiedergewonnenem, Kunststoff bestehen.

11. Haltekonstruktion nach einem der Ansprüche 1 bis 10, dadurch gekennzeichnet, daß die Längsträgerabstände und das Rastermaß zu einem Standardpalettenmaß kompatibel sind.

12. Haltekonstruktion nach einem der Ansprüche 1 bis 11, dadurch gekennzeichnet, daß das Substrat in separaten Kästen (5) in die Felder (3) einsetzbar ist, wobei die Kästen (5) so bemessen sind, daß jeweils ein oder mehrere Kästen (5) ein Feld (3) im wesentlichen ausfüllen.

13. Haltekonstruktion nach Anspruch 12, dadurch gekennzeichnet, daß die Kästen mit Pflanz-oder Saatgut besetzt sind.

14. Haltekonstruktion nach Anspruch 12 oder 13, dadurch gekennzeichnet, daß die Kästen (5) aus einem leicht verrottbaren Material bestehen.
